**Europäisches Patentamt**

**European Patent Office**

**Office européen des brevets**

(19)

(11)  **EP 1 130 581 B1**

(12)  ## EUROPEAN PATENT SPECIFICATION

(45) Date of publication and mention
of the grant of the patent:
**16.03.2005  Bulletin 2005/11**

(51) Int Cl.7: **G11B 7/12**, G11B 7/135,
G11B 7/00, G11B 7/125

(21) Application number: **01300155.7**

(22) Date of filing: **09.01.2001**

(54) **Compatible optical pickup for high-density recording/reproduction**

Kompatible optische Abtasvorrichtung für Aufnahme und Wiedergabe mit hohen Dichte

Dispositif de lecture/écriture optique à haute densité

(84) Designated Contracting States:
**DE FR GB NL**

(30) Priority: **04.03.2000  KR 2000010875**

(43) Date of publication of application:
**05.09.2001  Bulletin 2001/36**

(73) Proprietor: **SAMSUNG ELECTRONICS CO. LTD.**
**Suwon-city, Kyounggi-do 441-742 (KR)**

(72) Inventors:
  • **Kim, Tae-kyung**
**Paldal-gu, Suwon city, Kyungki-do (KR)**
  • **Chung, Chong-Sam**
**Paldal-gu, Suwon city, Kyungki-do (KR)**
  • **Ahn, Young-man**
**Paldal-gu, Suwon city, Kyungki-do (KR)**
  • **Seo, Hea-jung**
**Seongnam-city, Kyungki-do (KR)**

(74) Representative: **Chugg, David John et al**
**Appleyard Lees,**
**15 Clare Road**
**Halifax, West Yorkshire HX1 2HY (GB)**

(56) References cited:
**EP-A- 0 881 634          US-A- 6 005 834**

• **PATENT ABSTRACTS OF JAPAN vol. 1999, no.
01, 29 January 1999 (1999-01-29) & JP 10 269610
A (KONICA CORP), 9 October 1998 (1998-10-09)
-& US 6 052 355 A 18 April 2000 (2000-04-18)**
• **YAMAMOTO ET AL: "0.8-NA two element
objective lens for the optical disk" JAPANESE
JOURNAL OF APPLIED PHYSICS,
PUBLICATION OFFICE JAPANESE JOURNAL
OF APPLIED PHYSICS. TOKYO, JP, vol. 36, no.
1B, 1997, pages 456-459, XP002084439 ISSN:
0021-4922**

## Description

The present invention relates to an optical pickup for high-density recording/reproduction compatible for optical discs having different formats, and more particularly, to an optical pickup for high-density recording/reproduction adopting a single objective lens, which is compatible for optical discs having different formats, and is capable of correcting for chromatic aberration caused by different wavelengths of light and/or spherical aberration due to difference in thickness of optical discs.

Optical pickups are a device for recording information on or reproducing information from an optical disc by focusing a laser beam on the optical disc with an objective lens. The recording and reproduction capacity is determined by the size of the focused spot. The size of a focused spot is related with the wavelength ($\lambda$) of the laser beam, and the numerical aperture (NA) of the objective lens, as shown in formula (1) :

$$size\ of\ focused\ spot \propto \lambda\ /NA$$

For a higher recording density of about 15 gigabytes or more, the size of the spot being focused on an optical disc must be further reduced. To form a small spot for high-density recording, as can be inferred from formula (1), it is essential to adopt a blue laser as a light source, for emitting light having a short wavelength of about 410 nm, and an objective lens having a NA of 0.6 or more.

On the other hand, coma $W_{31}$, which occurs due to tilting of the optical disc, is associated with the tilt angle ($\theta$) of the information recording surface of the disc with respect to the optical axis, the refractive index (n) of the disc substrate, the thickness (d) of the disc substrate, and the NA of the objective lens, as expressed by formula (2):

$$W_{31} = \frac{d}{2} \cdot \frac{n^2\ (n^2\text{-}1)\ \sin\theta\ \cos\theta}{(n^2\text{-}\sin^2\theta)^{5/2}}\ NA^3 \qquad (2)$$

To ensure tolerance with respect to the tilt of disc for high density recording, there is a tendency of reducing the thickness (d) of the disc substrate. For example, compact discs (CDs) have a thickness of 1.2 mm and digital versatile discs (DVDs) have a thickness of 0.6 mm. Also, there is a high possibility that the thickness of future generation DVD family media (so-called high-definition (HD)-DVDs), which are recently being developed, is determined to be 0.6 mm or less.

Optical pickups for high-density recording/reproduction in/from future generation DVDs adopt a light source for emitting a blue laser beam, and an objective lens optimized to be suitable for the blue laser beam and the thickness of a future generation DVD substrate.

For the compatibility with existing discs, such as DVDs, the optical pickup for high-density recording and reproduction needs another light source for emitting a red laser beam. The reason why both blue and red light sources are adopted in the optical pickup for future generation DVDs is for the compatibility with DVD-recordable (DVD-R) and multi-layered DVDs, which have a low reflectivity with respect to blue light.

The objective lens of the optical pickup for future generation DVDs is designed to be suitable for blue light and the thickness of future generation DVD substrate. Thus, when a DVD is adopted as a recording medium, a red light spot focused on the recording surface of the DVD by the objective lens includes chromatic aberration due to difference in wavelengths of red and blue light. In addition, when the thickness of a future generation DVD substrate used is different from that of a DVD substrate, spherical aberration caused by the thickness difference of the discs occurs.

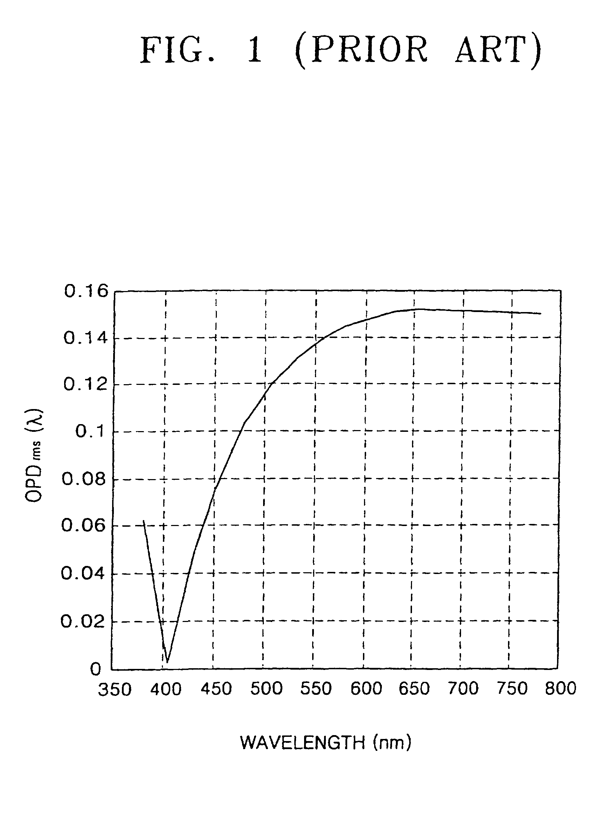

Figure 1 illustrates the optical path difference ($OPD_{rms}$) in an optical pickup adopting an objective lens designed exclusively for 405 nm light with respect to wavelength variations of light incident on the objective lens. In Figure 1, $OPD_{rms}$ refers to the amount of aberration in a light spot focused by the objective lens and is expressed in wavelengths.

As shown in Figure 1, when 405 nm light is incident on the objective lens, almost no aberration occurs, so that the $OPD_{rms}$ at 405 nm is close to zero. In contrast, when 650 nm light is incident on the objective lens, the $OPD_{rms}$ at the wavelength becomes $0.15\lambda$ due to increased aberration.

Thus, in consideration of a standard aberration allowance, i.e., $OPD_{rms}=0.07\lambda$, in the related field, the optical pickup for future generation DVDs, which is designed to focus 650 nm light with the objective lens optimized for 405 nm light, is not compatible with DVDs. In other words, for the compatibility with DVDs, the optical pickup for future generation DVDs needs a means for correcting for chromatic and/or spherical aberration mentioned previously.

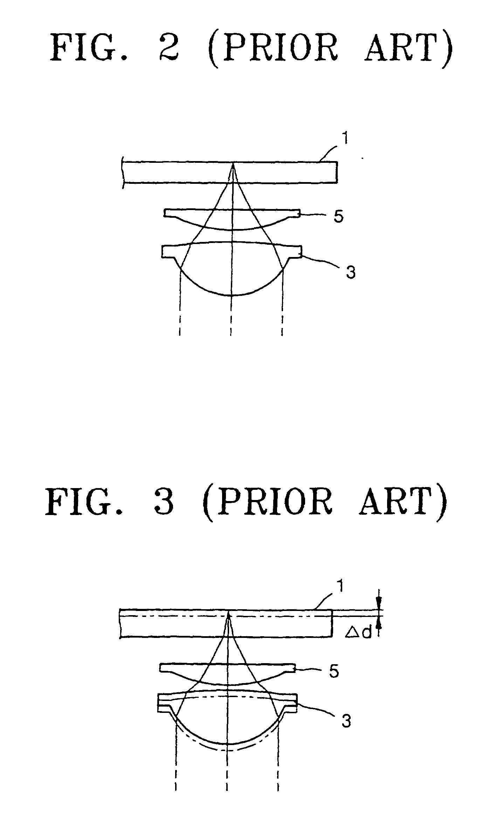

Referring to Figure 2, a conventional aberration correcting apparatus includes an objective lens 3 for focusing an incident beam and a condensing lens 5 for further condensing the beam focused by the objective lens 3 to form a light spot on an optical disc 1. As shown in Figure 3, the distance between the condensing lens 5 and the objective lens 3 is adjusted according to thickness variations ($\Delta d$) of the optical disc substrate 1 and wavelength variations of light used, such that aberration can be corrected.

However, as for such a conventional aberration correcting apparatus adopting two lenses, the condensing lens 5 and the objective lens 3, assembling the two lenses is complicated. Also, the objective lens 3 and the condensing lens 5 must be actuated for both tracking and focusing control, and adjusting the distance between the objective lens 3 and the condensing lens 5, so the structure of the entire actuator becomes complicated.

EP-A-0, 881, 834 (NEC Corporation) discloses an optical head device having first and second optical systems which emit and receive laser light at different wavelengths appropriate to optical disk media of different thicknesses and specifically teaches in relation to compact disks (CDs) and digital video disks (DVDs) appropriate to light of 780 nm and 650 nm respectively. This document teaches the use of a wavelength-selective phase plate located adjacent to an objective lens to change the phase distribution of only one of the different wavelength lights, in order to correct spherical aberration caused by the different thicknesses of the optical disk media. This document forms the pre-characterising portion of the claims appended hereto.

With a view to solve or reduce the above problems, it is an aim of embodiments of the present invention to provide an optical pickup for high-density recording/reproduction adopting a single objective lens, in which chromatic aberration caused by different wavelengths of light and/or spherical aberration due to thickness variations of optical discs can be corrected with improved configuration, and thus it is compatible for optical discs having different formats.

According to the present invention there is provided an optical pickup as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:

Figure 1 is a graph illustrating the optical path difference ($OPD_{rms}$) with respect to wavelength variations of light incident on an objective lens optimized for 405 nm light ;

Figure 2 is a schematic view of a conventional aberration correcting apparatus;

Figure 3 illustrates the operation of the conventional aberration correcting apparatus of Figure 2;

Figure 4 is a diagram illustrating the optical arrangement of a compatible optical pickup for high-density recording and reproduction according to a preferred embodiment of the present invention;

Figure 5 is a plan view of a part of a digital versatile disc (DVD) , showing only three lines of pits with 0.74 μm track pitch and 0.40 μm minimum mark length;

Figure 6 is a graph illustrating a signal reproduced from the central track of Figure 5;

Figures 7 through 9 illustrate the eye-patterns of the signals $S_o$, $S_m$ and $S_{sub}$ of Figure 6, respectively;

Figure 10 illustrates reproduction signal S processed using the signals $S_m$ and $S_{sub}$ of Figure 6 with a gain factor $k$ of 3.5, using formula (3), and further adjusted to include the same DC and AC components as those of signal $S_o$ of Figure 6;

Figure 11 illustrates the eye-pattern of the reproduction signal S of Figure 10; and

Figure 12 illustrates the optical arrangement of another embodiment of the compatible optical pickup for high-density recording/reproduction according to the present invention.

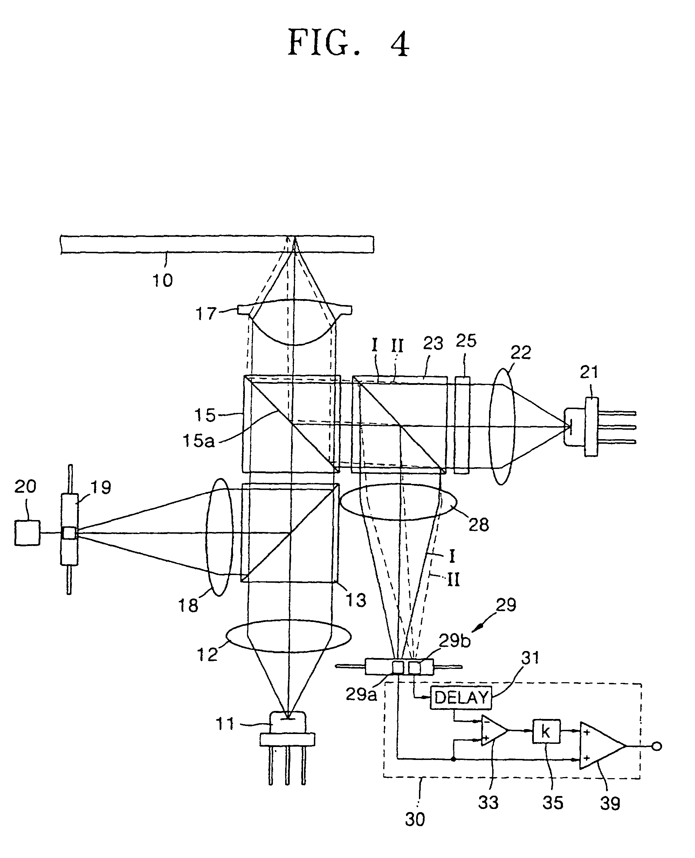

Referring to Figure 4, a preferred embodiment of a compatible optical pickup for high-density recording/reproduction according to the present invention includes first and second light sources 11 and 21 for emitting laser beams having different wavelengths, an objective lens 17 for focusing an incident beam to form a light spot on an optical disc 10, first through third optical path changing means 13, 23 and 15 for altering the traveling path of an incident beam, a light splitting means for splitting the beam incident from the second light source 21 so as to form at least two light spots on the optical disc 10, first and second photodetectors 19 and 29 for receiving beams reflecting from the optical disc 10 to detect signals through photoelectric conversion, and first and second signal processing units 20 and 30 for detecting a reproduction signal of the optical disc 10 from the signals detected by the first and second photodetectors 19 and 29.

In the present embodiment, the optical disc 10 is a first optical disc or a second optical disc which have different formats. The first optical disc may be, for example, future generation digital versatile disc (so-called, high-definition (HD) -DVDs) family media with a substrate thickness of 0.6 mm or less (the thickness from the light incident surface to the information recording surface) , and the second optical disc may be, for example, DVD family media (hereinafter, referred to as DVDs) with a substrate thickness of 0.6 mm.

The first light source 11, the first optical path changing means 13, the first photodetector 19 and the first signal processing unit 20 are used for recording an information signal on and/or reproducing an information signal from the first optical disc. In particular, the first light source 11 emits a relatively short wavelength of light, for example, about 400 nm light, suitable for the first optical disc. Diverging beam emitted from the first light source 11 is collimated by a collimating lens 12.

The first optical path changing means 13 includes, for example, a beam splitter for transmitting a portion of the incident beam and reflecting the remainder of the incident beam, as shown in Figure 4. The beam splitter can be a flat type or prism type beam splitter, other than the cubic type beam splitter shown in Figure 4.

Alternatively, the first optical path changing means may include a polarization beam splitter (not shown) for transmitting or reflecting the incident beam according to their polarization to alter the traveling path of the incident beam, and a phase retardation plate (not shown) disposed on the optical path between the polarization beam splitter and the third optical path changing means 15 to causing lag in-phase to the incident beam. Preferably, the phase retardation plate is a quarter-wave plate for retarding the phase of the incident beam by $\lambda/4$.

The objective lens 17 is optimized for the substrate thickness of the first optical disc and the wavelength of light emitted from the first light source 11, and has an NA of 0.6 or more. For this reason, when light emitted from the second light source 21 is focused on the optical disc 10 by the objective lens 177, chromatic aberration occurs due to a difference in wavelengths of the beams from the first and second light sources 11 and 21. In addition, when the substrate thickness of the first optical disc is different from that of the second optical disc, which will be described later, spherical aberration occurs in the light spot focused on the second optical disc after having been emitted form the second light source 2, due to a difference in substrate thicknesses. However, the chromatic aberration and/or spherical aberration are corrected by the light splitting means, the second photodetector 29 and the second signal processing unit 30, which will be described later, and thus the optical pickup according to the present invention is compatible for the first and second optical discs.

The third optical path changing means 15 is disposed on the optical path between the first optical path changing means 13 and the objective lens 17, transmits one of the beams emitted from the first and second light sources 11 and 12, and reflects the other beam, thereby changing the traveling path of the beams emitted from the first and second light sources 11 and 21. The third optical path changing means 15 may be a beam splitter with a mirror surface 15a for transmitting the beam emitted from the first light source 11 and reflecting the beam emitted from the second light source 21. Preferably, the mirror surface 15a is coated such that it is able to transmit blue light and reflect red light.

The first photodetector 19 receives the beam reflected from the first optical disc after having been emitted from the light source 11, through the objective lens 17, the third optical path changing means 15 and the first optical path changing means 13 in succession, and detects signals from the received beam through photoelectric conversion. The first signal processing unit 20 detects a reproduction information signal from the first optical disc using the signals detected by the first photodetector. In the present embodiment, as described previously, the optical pickup is able to record an information signal on a future generation DVD and reproduce a recorded information signal from a future generation DVD.

On the other hand, the second light source 21, the second optical path changing means 23, the light splitting means, the second photodetector 29 and the second signal processing unit 20 cooperatively record an information signal on and/or reproduce an information signal from the second optical disc. In particular, the second light source 21 emits a relatively long wavelength of light, for example, about 650 nm light, suitable for the second optical disc. Diverging beam emitted from the second light source 21 is collimated by a collimating lens 22.

The parallel beam is split into at least two beams including a first beam I and a second beam II by the light splitting means. The first and second beams I and II are focused through the objective lens 17 on the optical disc 10, thereby resulting in a main light spot and a sub-light spot. Preferably, the light splitting means may include a holographic optical element (HOE) 25 capable of causing a predetermined amount of spherical aberration to the second beam II, as well as splitting the incident beam into the first and second beams I and II. In this case, the first beam I is the $0^{th}$ order beam diffracted by the HOE 25, and the second beam II is the $\pm 1^{st}$ order beam diffracted by the HOE 25.

The second optical path changing means 23, which is arranged on the optical path between the HOE 25 and the third optical path changing means 15, alters the traveling path of the incident beam. In particular, light incident from the second light source 21 is directed toward the third optical path changing means 15 by the second optical path changing means 23, and light incident from the third optical path changing means 15 is directed toward the second photodetector 19 by the second optical path changing means 23. Like the first optical path changing means 11, the second optical path changing means 23 may be a beam splitter, or a combination of a polarization beam splitter (PBS) and a phase retardation plate.

The first and second beams I and II from the HOE 25 pass through the second and third optical path changing means 23 and 15 in sequence, and focused by the objective lens 17 on the same track of the optical disc 10 as a main light spot and a sub-light spot.

The main light spot and the sub-light spot on the optical disc 10 include chromatic aberration caused by a difference in wavelengths of light emitted from the first and second light sources 11 and 21. When the second optical disc whose substrate thickness is different from that of the first optical disc is adopted, the main light spot and the sub-light spot also include spherical aberration caused by a difference in substrate thicknesses. Comparing with the main light spot, the sub-light spot further includes spherical aberration intentionally caused by the HOE 25.

After having been reflected from the optical disc 10, the first and second beams I and II are received by the second photodetector 29 through the objective lens 17, the third optical path changing means 15, the second optical path changing means 23, and a condensing lens 28. The condensing lens 28 condenses the first and second beams I and II passed through the second optical path changing means 23. The second photodetector 29 includes first and second light receiving portions 29a and 29b for receiving the first and second beams I and II, respectively.

The second signal processing unit 30 corrects for chromatic aberration and/or spherical aberration due to thickness difference, which are described previously, from the electrical signals obtained through photoelectric conversion by the first and second light receiving portions 29a and 29b, and outputs a reproduction signal. In particular, the second signal processing unit 30 includes a differential unit 33 for subtracting the signals output from the first and second receiving portions 29a and 29b, a gain controller 35 for amplifying a subtraction signal output from the differential unit 33 with a gain factor k, and an adder 37 for summing a signal output from the gain controller 33 and the signal output from the first receiving portion 29a.

In other words, when an information signal is reproduced from the second optical disc, the second signal processing unit 30 processes the detection signals output from the first and second light receiving portions 29a and 29b using formula (3) below, and outputs a reproduction signal S from which chromatic aberration and spherical aberration due to thickness difference have been corrected:

$$S = S_m + k \, (S_m - S_{sub}) \qquad (3)$$

where $S_m$ represents a main reproduction signal that originates from the main light spot, which has been received and converted into an electrical signal by the first light receiving portion 29a, $S_{sub}$ represents a sub-reproduction signal that originates from the sub-light spot, which has been received and converted into an electrical signal by the second light receiving portion 29b, and k is a gain factor.

The gain factor k varies according to the degree of the thickness difference between the first and second optical discs, and is controlled by a k-value adjusting circuit (not shown) such that jitter of the reproduction signal from the second optical disc is minimized. In this case, preferably, the k-value adjusting circuit monitors jittering of the reproduction signal output from the second signal processing unit 30, adjusts the gain factor k according to the monitoring result, and feeds back the result to the gain controller 35 for gain control.

In the case where two light spots, a main light spot and a sub-light spot, are focused on the same track of the optical disc 10 with the HOE 25, as mentioned previously, the sub-light spot is separated from the main light spot in the track direction of the optical disc. Accordingly, it is preferable that the second signal processing unit 30 further comprises a delay 31, as shown in Figure 4, for compensating for a time delay between the signals originating from the two light spots. For example, the delay 31 is installed between the output end of the second light receiving portion 29a and an input end of the differential unit 33. The delay 31 delays the phase of the preceding signal, for example, output from the second light receiving portion 29a to match the phases of the signals output from the first and second light receiving portions 29a and 29b.

In the operation of the optical pickup according to the present invention, having the configuration described with reference to Figure 4, when a future generation DVD family optical disc with a first format is adopted as the optical disc 10, the first light source 11 operates to emit blue light. Diverging beam emitted from the first light source 11 is collimated by the collimating lens 12, passes through the first and third optical path changing means 13 and 15 in succession, and incident on the objective lens 17. The objective lens 17 focuses the incident beam to form a light spot on the recording surface of the optical disc with the first format. For example, if the optical disc with the first format is recordable, an information signal can be recorded by the light spot focused on the recording surface.

Light reflected from the optical disc with the first format is incident on the first optical path changing means 13 through the objective lens 17 and the third optical path changing means 13 in succession. The incident beam is reflected by the first optical path changing means 13, condensed by the condensing lens 18 and received by the first photodetector 19. During reproduction, an electrical signal detected by the first photodetector 19 is provided to the first signal processing unit 20, and the first signal processing unit 20 outputs an information signal reproduced from the optical disc with the first format. It will be appreciated that the detection signals of the first photodetector 19 are used in detecting focusing and tracking error signals such that the objective lens 17 scans along the track center of the optical disc in a normal focus position.

On the other hand, when a DVD family optical disc with a second format is adopted as the optical disc 10, the second light source 21 is operated to emit red light. Diverging beam emitted from the second light source 21 is collimated by the collimating lens 22 and diffracted by the HOE 25 to slit into a first beam I, and a second beam II including spherical aberration.

The first and second beams I and II transmits the second optical path changing means 23, reflected by the third optical path changing means 15 and incident on the objective lens 17. The objective lens 17 focuses the incident first and second beams I and II to form a main light spot and a sub-light spot on the same track of the recording surface of the optical disc with the second format. If the optical disc with the second format is recordable, an information signal can be recorded by the main light spot focused on the recording surface.

The first and second beams I and II reflected by the optical disc with the second format transmit the objective lens 17, is directed toward the second optical path changing means 23 by the third optical path changing means 15, reflected by the second optical path changing means 23, condensed by the condensing lens 28, and received by the first and second light receiving portions 29a and 29b, respectively. During reproduction, electrical signals detected by the first and second light receiving portions 29a and 29b are input to the second signal processing unit 30, and the second signal processing unit 30 outputs an information signal reproduced from the optical disc with the second format, from which chromatic aberration and/or spherical aberration caused by thickness difference of optical discs described previously are removed.

Like the detection signal of the first photodetector 19, it is appreciated that the detection signals of the second photodetector 29 can be used in detecting focusing and tracking error signals such that the objective lens 17 scans along the track center of the optical disc in a normal focus position.

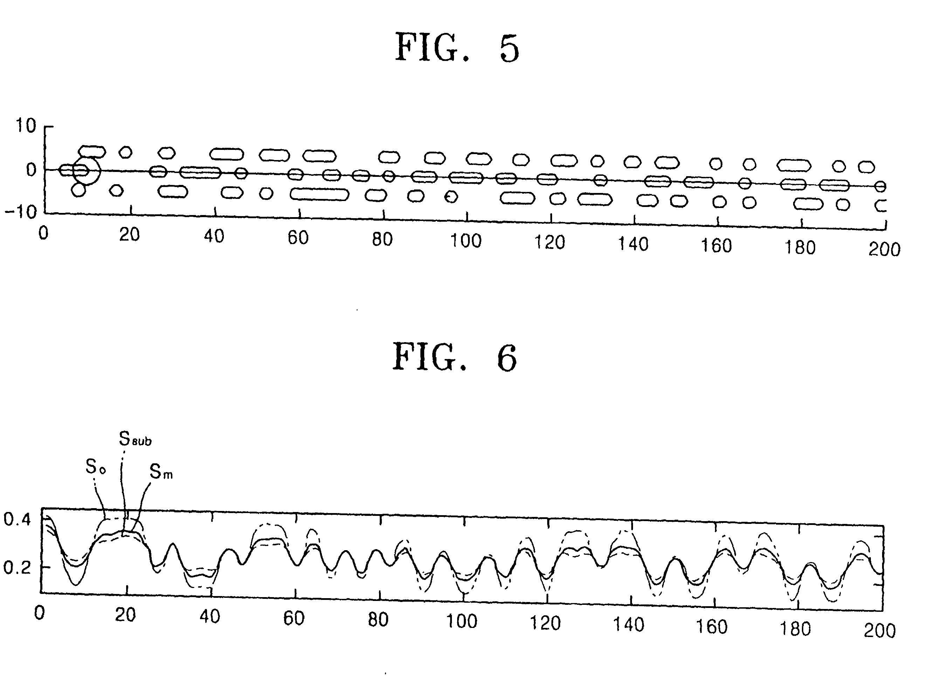

The operation of the compatible optical pickup shown in Figure 4 according to the present invention will be described with reference to Figures 5 through 11. It will be described that reproduction of a signal without chromatic and/or spherical aberration caused by substrate thickness of optical discs when the optical disc with the second format, a DVD family optical disc, is adopted.

Figure 5 illustrates a part of a DVD having three pit streams with 0.74 μm track pitch and 0.40 μm minimum mark length, and Figure 6 illustrates a signal reproduced from the central track of the optical disc of Figure 5.

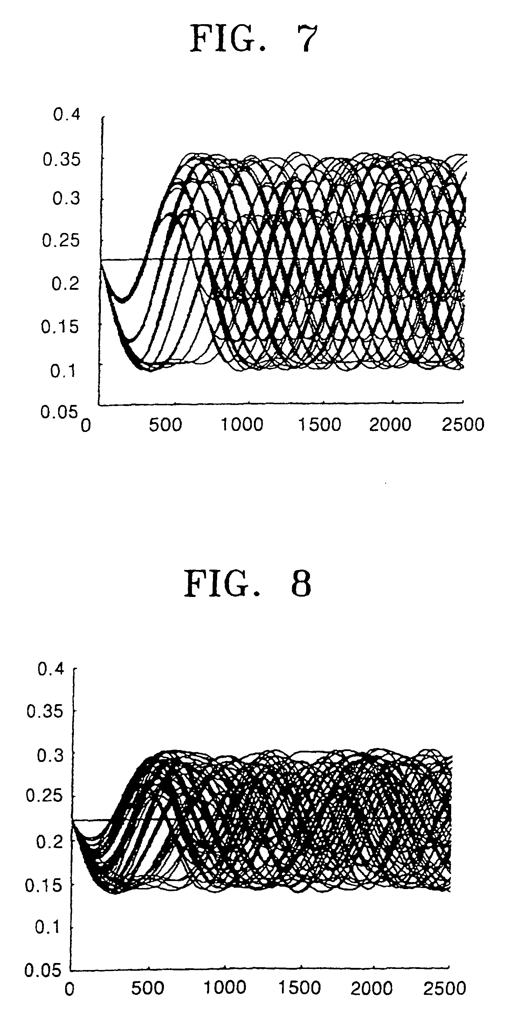

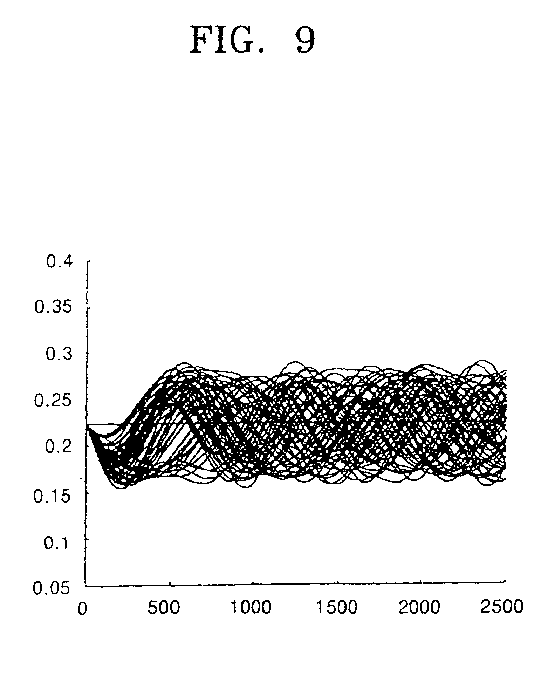

Referring to Figure 6, dashed lines indicated by $S_o$ indicate a reproduction signal from the central track of the DVD shown in Figure 5, which is reproduced with a light source having 650 nm wavelength, and an objective lens designed to be suitable for 0.6-mm thick disc substrate with a NA of 0.6. The value of jittering of the reproduction signal $S_o$ is 8.64%, and the eye-pattern of the signal $S_o$ is shown in Figure 7. In Figure 6, solid lines indicated by $S_m$ indicate a reproduction signal from the central track of the DVD shown in Figure 5, which is reproduced with a light source having 650 nm wavelength and an objective lens designed to be suitable for 0.55-mm thick disc substrate and a 400 nm wavelength. The value of jittering of the reproduction signal is 24.16%, and the eye-pattern of the signal $S_m$ is shown in Figure 8. Dashed lines indicated by $S_{sub}$ indicates a reproduction signal from the DVD of Figure 5 when a second beam II to which spherical aberration corresponding to a substrate thickness of 50 μm is caused by adopting the HOE 25 is further focused as an sub-light spot on the recording surface. The value of jittering of the reproduction signal $S_{sub}$ is 30% or more, and the eye-pattern of the signal $S_{sub}$ is shown in Figure 9.

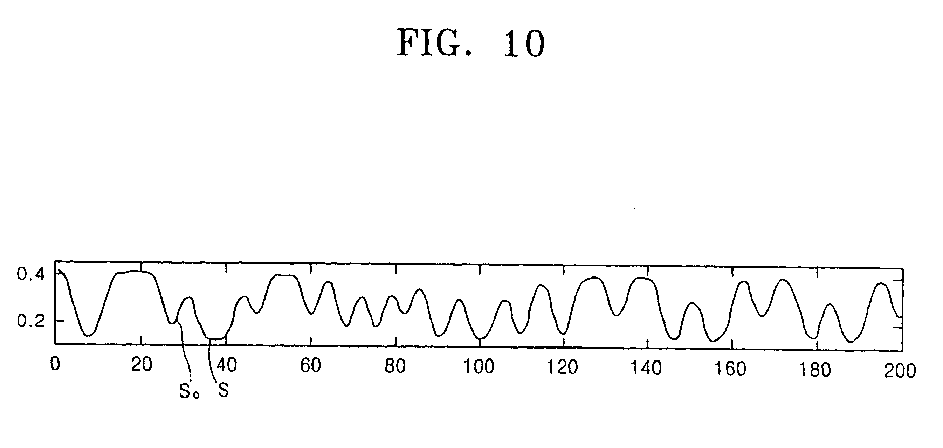

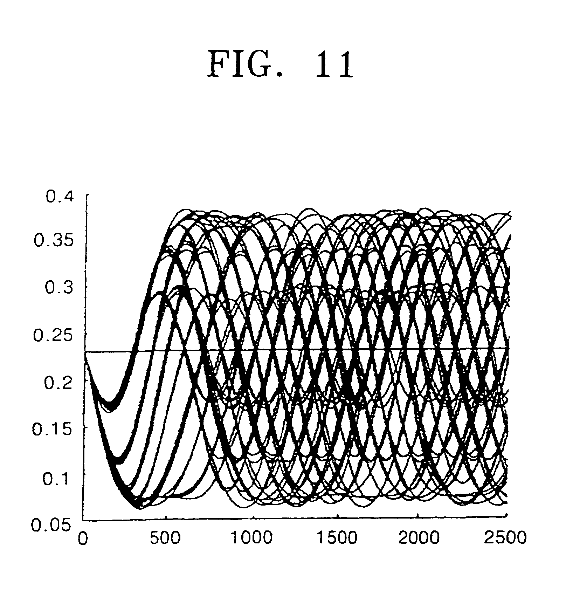

Figure 10 illustrates a reproduction signal S obtained by correcting for aberration of the signals $S_m$ and $S_{sub}$ using formula (3) above with a gain factor k of 3.5, which is set by the gain adjustor 35 of the second signals processing unit 30 of Figure 4, i.e., $S_m$ + 3.5 ($S_m$-$S_{sub}$), and then whose DC and AC components are adjusted to be the same as those of the reproduction signal $S_o$. As shown in Figure 10, the reproduction signal S and $S_o$ are almost the same. The reproduction signal S has the eye-pattern shown in Figure 11, and the value of jittering of the reproduction signal is 8.88%, which is similar to the jittering (8.64%) of the signal $S_o$ reproduced with a light source having 650 nm wavelength and an objective lens for DVDs.

Thus, although a DVD family optical disc is adopted, the optical pickup according to the present invention, having the above configuration, can output a reproduction signal from which chromatic aberration and/or spherical aberration caused by thickness difference of disc substrates are removed by the operation using formula (3).

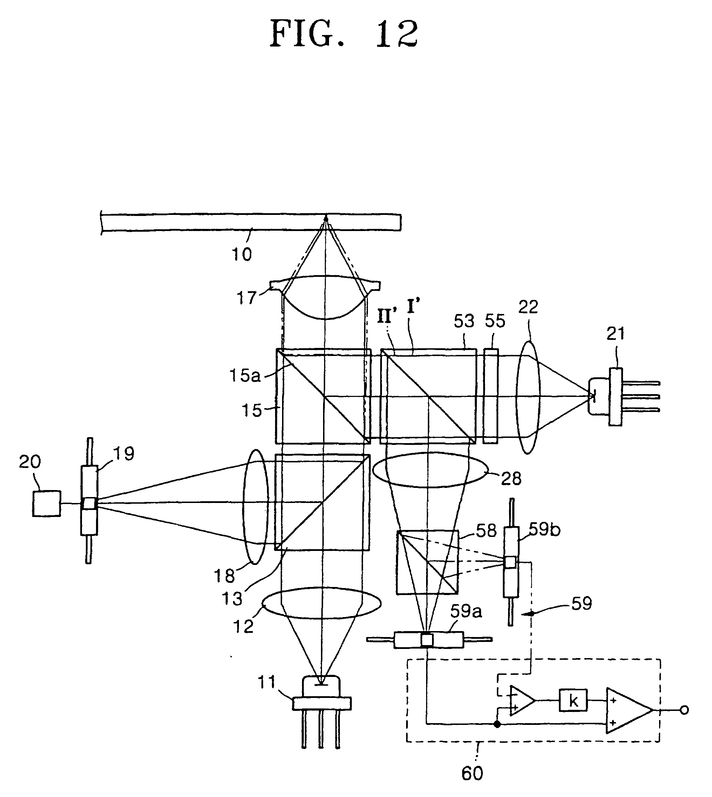

Figure 12 illustrates the optical arrangement of another preferred embodiment of an optical pickup according to the present invention. As shown in Figure 12, the optical pickup includes first and second light sources 11 and 21 for emitting beams having different wavelengths, an objective lens 17 for focusing an incident beam to form a light spot on an optical disc 10, first, second and third optical path changing means 13, 53 and 15, a light splitting means for splitting the incident beam emitted from the second light source 21 to form at least two light spots on the optical disc 10, first and second photodetectors 19 and 59 for receiving the beam reflected from the optical disc, and first and second signal processing units 20 and 60 for detecting reproduction signals from electrical signals detected by the first and second photodetectors 19 and 59, respectively. In Figure 12, the same elements as those illustrated in Figure 4 are represented by the same reference numerals, and description thereof is not provided here.

As in the previous embodiment described with reference to Figure 4, the second light source 21, the second light path changing means 53, the light splitting means, the second photodetector 59 and the second signal processing unit 60 are used to record an information signal on and/or reproduce an information signal from a DVD family optical disc with a second format.

Light collimated by the collimating lens 22 after having been emitted from the second light source 21 is split into at least two beams, first and second beams I' and II' by the light splitting means. The first and second beams I' and II' are focused on the optical disc 10 by the objective lens 17 to form a main light spot and a sub-light spot, respectively.

In the present embodiment, the light splitting means may be a polarization HOE 55 for generating a first beam I' having one polarized component, for example, P-polarized component, and a second beam II' having the other polarized component, for example, S-polarized component. Here, the polarization HOE 55 causes a predetermined amount of spherical aberration only to the S-polarized second beam II'. The first and second beams I' and II' are $0^{th}$-order and $1^{st}$-order beams, respectively, diffracted from the polarization HOE 55.

The second path changing means 53 arranged on the optical path between the polarization HOE 55 and the third optical path changing means 15 alters the optical path of the incident beam. In the present embodiment, the second optical path changing means 53 may be a beam splitter. The beam splitter transmits the incident beam from the second light source 21 regardless of their polarization, such that it heads toward the third optical path changing means 15. The beam splitter reflects the incident beam from the third optical path changing means 15 regardless of their polarization, such that it heads toward the second photodetector 59.

Accordingly, the first and second beams I' and II' split by the polarization HOE 55 are focused on the optical disc 10 by the objective lens 17. Here, a main light spot from the first beam I' and the sub-light spot from the second beam II' are formed on the same track of the optical disc 10. For this reason, the second signal processing unit 60 does not need a delay, unlike the second signal processing unit 30 (see Figure 4) of the previous embodiment. The main light spot and the sub-light spot have similar characteristics to those of the main light spot and the sub-light spot described in the previous embodiment, except that they have different polarized components.

On the other hand, the optical pickup of Figure 12 may further comprise a polarization beam splitter 58 on the optical path between the second light path changing means 53 and the second light photodetector 59, for splitting the first and second beams I' and II' passed through the objective lens 17, the third and second optical path changing means 15 and 53 in sequence after having been reflected from the optical disc 10 and passed through the objective lens 17, according their polarization, such that they head toward first and second light receiving portions 59a and 59b of the second photodetector 59. It will be appreciated that the first and second light receiving portions 59a and 59b of the second photodetector 59 are arranged, such that they are able to separately receive the first and second beams I' and II' split by the polarization beam splitter 58.

When reproducing an information from a DVD family optical disc with a second format, the second signal processing unit 60 processes the electrical signals undergone photoelectric conversion after having been received by the first and second light receiving portions 59a and 59b, using formula (3) above, as in the previous embodiment, so that it outputs a reproduction signal from which chromatic aberration and/or spherical aberration caused by difference in substrate thickness of optical disc are corrected. The second signal processing unit 60 has the same structure as that of the second signal processing unit 30 of Figure 4, except that a delay is not included in the second signal processing unit 60 of the present embodiment. For this reason, the constituent elements of the second signal processing unit 60 are designated with the same reference numerals used as in Figure 4, and description of the elements is not provided here.

In order to correct for spherical aberration caused by thickness deviation of future generation DVD family optical discs, in the optical pickup according to the present invention, the optical system for recording information on or reproducing information from a future generation DVD family optical disc with a first format can be constituted to be the same as or similar to the optical system adopted to record information on or reproduce information from a DVD family optical disc with a second format, described previously with reference to Figures 4 and 12.

In particular, a light splitting means (not shown) is provided between the first light source 11 and the first optical path changing means 13 to split an incident beam such that a main light spot, and a sub-light spot including spherical aberration, are focused on the optical disc with the first format. Then, two beams reflected from the optical disc with the first format are received by different light receiving portions (not shown) of the first photodetector 19, respectively, and the first signal processing unit 20 receives and processes electrical signals detected by the first photodetector 19 using formula (3) above, thereby outputting a reproduction signal from which spherical aberration caused by thickness deviation of future generation DVD family optical discs is corrected. The spherical aberration can be removed by adjusting a gain factor k in the first signal processing unit 20 for the operation using formula (3) above.

By focusing a sub-light spot including spherical aberration on an optical disc along with a main light spot and then detecting a reproduction signal through the operation using formula (3) above with the two beams reflected from the optical disc, as described above, chromatic aberration and/or spherical aberration, and coma caused by tilting of the optical disc can be corrected, thereby sharply improving jittering of a reproduction signal.

As previously mentioned, the optical pickup for high-density recording/reproduction according to the present invention has a configuration in which a sub-light spot including spherical aberration is focused on an optical disc along with a main light spot, and a reproduction signal is detected by processing the two beams reflected from the optical disc and received by a photodetector, using formula (3).

Use of a single objective lens in the optical pickup according to the present invention makes the configuration of an actuator simple. The optical can correct for chromatic aberration caused by use of a light source having a different wavelength, and/or spherical aberration caused by thickness variations of optical disc substrate, thereby detecting a reproduction signal improved in terms of jittering. Thus, the inventive optical pickup is compatible for optical discs having different formats, for example, for future generation DVDs and DVDs.

Although a few preferred embodiments have been shown and described, it will be appreciated by those skilled in the art that various changes and modifications might be made without departing from the scope of the invention, as defined in the appended claims.

**Claims**

**1.** An optical pickup compatible for optical discs having different formats, including a first light source (11) for emitting a beam having a relatively short wavelength suitable for a first optical disc with a first format, and a second light source (21) for emitting a beam having a relatively long wavelength suitable for a second optical disc with a second different format, the optical pickup comprising:

an objective lens (17) designed to be suitable for the first optical disc and the wavelength of beam emitted from the first light source, for focusing an incident beam to form a light spot on a corresponding optical disc;

a first optical path changing means (13) arranged on the optical path between the first light source (11) and the objective lens (17), for altering the traveling path of the beam originating from the first light source (11);

a second optical path changing means (23) arranged on the optical path between the second light source (21) and the objective lens (17), for altering the traveling path of the beam originating from the second light source (21);

a third optical path changing means (15) arranged on the optical path between the first optical path changing means (13) and the objective lens (17), and between the second optical path changing means (23) and the objective lens (17), for transmitting one of the beams originating from the first and second light sources (11; 21), and reflecting the other of the beams, to alter the traveling path of an incident beam;

a first photodetector (19) for receiving the beam reflected from a corresponding optical disc and passed through the objective lens (17), the third optical path changing means (15) and then the first optical path changing means (13) after having been originated from the first light source (11), and photoelectrically converting the received beam;

a first signal processing unit (20) for detecting a reproduction signal of the first optical disc from the signal output from the first photodetector (19);

a second photodetector (29) for receiving the beam reflected from the corresponding optical disc and passed through the objective lens (17), the third optical path changing means (15) and then the second optical path changing means (23) after having been originated from the second light source (21), and photoelectrically converting the received beam; and

a second signal processing unit (30) for processing the signals output from the second photodetector (29);

**characterized in that**:

a first light splitting means (25) is arranged on the optical path between the second light source (21) and the second optical path changing means (23), for splitting the incident beam into at least two beams including first and second beams to be focused as a main light spot and a sub-light spot, respectively, on a corresponding optical disc and for causing a predetermined amount of spherical aberration only to the second beam, such that the second beam includes spherical aberration relative to the first beam;

the second photodetector (29) comprises first and second light receiving portions (29a; 29b), for receiving the first and second beams reflected from the corresponding optical disk; and

the second signal processing unit (30) processes the signals output from the first and second light receiving portions of the second photodetector (29) wherein assuming that a main reproduction signal from the main light spot, which has been received and photoelectrically converted by the first light receiving portion, is $S_m$, and a sub-reproduction signal from the sublight spot, which has been received and photoelectrically converted by the second light receiving portion, is $S_{sub}$, and $k$ is a gain factor, the second signal processing unit (30; 60) processes the signals output from the first and second light receiving portions (29a, 29b; 59a, 59b) using the following formula, thereby outputting a final reproduction signal S from which chromatic aberration caused by different wavelengths of the beams originated from the first and second light sources (11,21), and/or spherical aberration caused by thickness difference between the first and second optical discs, are corrected:

$$S = S_m + k (S_m - S_{sub})$$

2. The optical pickup of claim 1, wherein the first light source (11) emits blue light and the second light source (21) emits red light.

3. The optical pickup of claim 1 or 2, wherein the first light splitting means is a holographic optical element (HOE) (25).

4. The optical pickup of any preceding claim, wherein the second signal processing unit (30) further comprises a delay (31) between the output end of the first and/or second light receiving portions (29a, 29b) and at least one input end of the second processing unit (20), for delaying one of the signals output from the first and second light receiving portions (29a, 29b) to match the phases of the electrical signals.

5. The optical pickup of any preceding claim, wherein the first light splitting means is a polarization holographic optical element (HOE) (55) for generating a first beam having one polarized component and a second beam having the other polarized component, and causing a predetermined amount of spherical aberration only to the second beam having the other polarized component, such that the second beam further includes spherical aberration relative to the first beam; and the optical pickup further comprises a polarization beam splitter (58) disposed on the optical path between the second optical path changing means (53) and the second photodetector (59), for transmitting or reflecting the first and second beams reflected from a corresponding optical disc and passed through the objective lens (17), the third optical path changing means (15) and then the second optical path changing means (23), according to their polarization, wherein the first and second light receiving portions (59a, 59b) of the second photodetector (59) are arranged such that they are able to separately receive the first and second beams having different polarized components split by the polarization beam splitter (58).

6. The optical pickup of any of claims 1 through 5, further comprising:

a second light splitting means on the first optical path between the first light source (11) and the optical path changing means (13), for splitting the beam emitted from the first light source (11) into third and fourth beams to be focused as a main light spot and a sub-light spot on a corresponding optical disc, respectively;

wherein the first photodetector (19) includes third and fourth light receiving portions for receiving the third and fourth beams reflected from a corresponding optical disc and passed through the objective lens (17), the third optical path changing means (15) and then the first optical path changing means (13), respectively, and the first signal processing portion outputs a reproduction signal from which spherical aberration caused by thickness deviation of the first optical disc is corrected, from electrical signals photoelectrically converted by the third and fourth light receiving portions after having been received by the same.

**Patentansprüche**

1. Eine optische Abtastvorrichtung, die für optische Platten, die verschiedene Formate aufweisen, kompatibel ist, eine erste Lichtquelle (11) zum Aussenden eines Strahls, der eine relativ kurze Wellenlänge aufweist, die für eine erste optische Platte mit einem ersten Format geeignet ist, und eine zweite Lichtquelle (21) zum Aussenden eines Strahls, der eine relativ lange Wellenlänge aufweist, die für eine zweite optische Platte mit einem zweiten unterschiedlichen Format geeignet ist, enthaltend, wobei die optische Abtastvorrichtung umfasst:

eine Objektivlinse (17), die so konzipiert ist, dass sie für die erste optische Platte und die Wellenlänge des Strahls, der von der ersten Lichtquelle ausgesendet wird, geeignet ist, zum Fokussieren eines einfallenden Strahls, um einen Lichtfleck auf einer entsprechenden optischen Platte auszubilden;

eine erste Einrichtung zum Ändern des optischen Wegs (13), auf dem optischen Weg zwischen der ersten Lichtquelle (11) und der Objektivlinse (17) angeordnet, zum Ändern des Laufwegs des Strahls, der von der ersten Lichtquelle (11) stammt;

eine zweite Einrichtung zum Ändern des optischen Wegs (23), auf dem optischen Weg zwischen der zweiten Lichtquelle (21) und der Objektivlinse (17) angeordnet, zum Ändern des Laufwegs des Strahls, der von der zweiten Lichtquelle (21) stammt;

eine dritte Einrichtung zum Ändern des optischen Wegs (15), auf dem optischen Weg zwischen der ersten Einrichtung zum Ändern des optischen Wegs (13) und der Objektivlinse (17) und zwischen der zweiten Einrichtung zum Ändern des optischen Wegs (23) und der Objektivlinse (17) angeordnet, zum Durchlassen eines der Strahlen, die von der ersten und der zweiten Lichtquelle (11; 21) stammen, und zum Reflektieren des anderen der Strahlen, um den Laufweg eines einfallenden Strahls zu ändern;

einen ersten Photodetektor (19) zum Empfangen des Strahls, der von einer entsprechenden optischen Platte reflektiert wird und der durch die Objektivlinse (17), die dritte Einrichtung zum Ändern des optischen Wegs (15) und danach durch die erste Einrichtung zum Ändern des optischen Wegs (15) verläuft, nachdem er der ersten Lichtquelle (11) entstammt ist, und zum photoelektrischen Umwandeln des empfangenen Strahls;

eine erste Signalverarbeitungseinheit (20) zum Ermitteln eines Wiedergabesignals von der ersten optischen Platte aus dem von dem ersten Photodetektor (19) ausgegebenen Signal;

einen zweiten Photodetektor (29) zum Empfangen des Strahls, der von der entsprechenden optischen Platte reflektiert wird und der durch die Objektivlinse (17), die dritte Einrichtung zum Ändern des optischen Wegs (15) und danach durch die zweite Einrichtung zum Ändern des optischen Wegs (23) verläuft, nachdem er der zweiten Lichtquelle (21) entstammt ist, und zum photoelektrischen Umwandeln des empfangenen Strahls; und

eine zweite Signalverarbeitungseinheit (30) zum Verarbeiten der von dem zweiten Photodetektor (29) ausgegebenen Signale;

**dadurch gekennzeichnet, dass**:

eine erste Lichtteilereinrichtung (25) auf dem optischen Weg zwischen der zweiten Lichtquelle (21) und der zweiten Einrichtung zum Ändern des optischen Wegs (23) zum Aufspalten des einfallenden Strahls in zumindest zwei Strahlen, die einen ersten und einen zweiten Strahl einschließen, die als ein Hauptlichtfleck und ein Nebenlichtfleck auf eine entsprechende optische Platte fokussiert werden sollen und zum Verursachen eines vorherbestimmten Grads an sphärischer Aberration nur für den zweiten Strahl, so dass der zweite Strahl eine sphärische Aberration relativ zu dem ersten Strahl aufweist, angeordnet ist;

der zweite Photodetektor (29) ein erstes und ein zweites lichtempfangendes Element (29a; 29b) zum Empfangen des ersten und des zweiten von der entsprechenden optischen Platte reflektierten Strahls umfasst;

die zweite Signalverarbeitungseinheit (30) die von dem ersten und dem zweiten lichtempfangenden Element des zweiten Photodetektors (29) ausgegebenen Signale verarbeitet, wobei die zweite Signalverarbeitungseinheit (30; 60) die von dem ersten und dem zweiten lichtempfangenden Element (29a, 29b; 59a, 59b) ausgegebenen Signale, wenn ein Hauptwiedergabesignal von dem Hauptlichtfleck, das von dem ersten lichtempfangenden Element empfangen und photoelektrisch umgewandelt worden ist, mit $S_m$ bezeichnet ist, und ein Nebenwiedergabesignal von dem Nebenlichtfleck, das von dem zweiten lichtempfangenden Element empfangen und photoelektrisch umgewandelt worden ist, mit $S_{sub}$ bezeichnet ist, und k einen Verstärkungsfaktor darstellt, unter Verwendung der folgenden Formel verarbeitet,

$$S = S_m + k (S_m - S_{sub}),$$

wodurch sie ein endgültiges Wiedergabesignal S ausgibt, das bezüglich einer chromatischen Aberration, die durch unterschiedliche Wellenlängen der von der ersten und der zweiten Lichtquelle (11, 12) stammenden Strahlen verursacht wird, und/oder einer sphärischen Aberration, die durch einen Dickeunterschied zwischen der ersten und der zweiten optischen Platte verursacht wird, korrigiert ist.

2. Die optische Abtastvorrichtung nach Anspruch 1, worin die erste Lichtquelle (11) blaues Licht aussendet, und die zweite Lichtquelle (21) rotes Licht aussendet.

3. Die optische Abtastvorrichtung nach Anspruch 1 oder 2, worin die erste Lichtteilereinrichtung ein holographisches optisches Element (HOE) (25) ist.

4. Die optische Abtastvorrichtung nach einem der vorherigen Ansprüche, worin die zweite Signalverarbeitungseinheit (30) weiterhin einen Verzögerer (31) zwischen dem Ausgabeende des ersten und/oder zweiten lichtempfangenden Elements (29a, 29b) und zumindest einem Eingabeende der zweiten Verarbeitungseinheit (30) zum Verzögern eines der von dem ersten und dem zweiten lichtempfangenden Element (29a, 29b) ausgegebenen Signale umfasst, um die Phasen der elektrischen Signale einander anzupassen.

5. Die optische Abtastvorrichtung nach einem der vorherigen Ansprüche, worin die erste Lichtteilereinrichtung ein polarisierendes holographisches optisches Element (HOE) (55) zum Erzeugen eines ersten Strahls, der eine polarisierte Komponente besitzt, und eines zweiten Strahls, der die andere polarisierte Komponente besitzt, und zum Verursachen eines vorherbestimmten Grads an sphärischer Aberration nur für den zweiten Strahl, der die andere polarisierte Komponente besitzt, so dass der zweite Strahl weiterhin eine sphärische Aberration gegenüber dem ersten Strahl aufweist, ist; und die optische Abtastvorrichtung weiterhin umfasst einen Polarisationsstrahlteiler (58), der auf dem optischen Weg zwischen der zweiten Einrichtung zum Ändern des optischen Wegs (53) und dem zweiten Photodetektor (59) angebracht ist, zum Durchlassen oder Reflektieren des ersten und zweiten von einer entsprechenden optischen Platte reflektierten und durch die Objektivlinse (17), die dritte Einrichtung zum Ändern des optischen Wegs (15) und danach die zweite Einrichtung zum Ändern des optischen Wegs (23) verlaufenden Strahls, gemäß deren Polarisation, worin das erste und zweite lichtempfangende Element (59a, 59b) des zweiten Photodetektors (59) so angeordnet sind, dass sie in der Lage sind, unabhängig von einander den ersten und den zweiten durch den Polarisationsstrahlteiler (58) aufgespalteten Strahl mit unterschiedlichen polarisierten Komponenten zu empfangen.

6. Die optische Abtastvorrichtung nach einem der Ansprüche 1 bis 5, weiterhin umfassend:

   eine zweite Lichtteilereinrichtung auf dem ersten optischen Weg zwischen der ersten Lichtquelle (11) und der Einrichtung zum Ändern des optischen Wegs (13) zum Aufspalten des von der ersten Lichtquelle (11) ausgesendeten Strahls in einen dritten und einen vierten Strahl, die als ein Haupttichtfteck und ein Nebenlichtfleck auf eine entsprechende optische Platte fokussiert werden sollen;

   worin der erste Photodetektor (19) ein drittes und ein viertes lichtempfangendes Element zum Empfangen des dritten und vierten, jeweils von einer entsprechenden optischen Platte reflektierten und durch die Objektivlinse (17), die dritte Einrichtung zum Ändern des optischen Wegs (15) und danach die erste Einrichtung zum Ändern des optischen Wegs (13) verlaufenden Strahls enthält, und das erste signalverarbeitende Element aus elektrischen Signalen, die von dem dritten und dem vierten lichtempfangenden Element, nachdem sie von denselben empfangen worden sind, photoelektrisch umgewandelt werden, ein Wiedergabesignal ausgibt, das bezüglich einer sphärischen Aberration, die durch die Dichteabweichung der ersten optischen Platte verursacht wird, korrigiert ist.

## Revendications

1. Capteur optique compatible pour des disques optiques ayant différents formats, incluant une première source lumineuse (11) pour émettre un faisceau ayant une longueur d'onde relativement courte adaptée à un premier disque optique ayant un premier format, et une seconde source lumineuse (21) pour émettre un faisceau ayant une longueur d'onde relativement longue adaptée à un second disque optique ayant un second format différent, le capteur optique comportant :

   un objectif (17) conçu pour être adapté au premier disque optique et à la longueur d'onde du faisceau émis par la première source lumineuse, pour focaliser un faisceau incident afin de former un point lumineux sur un disque optique correspondant,
   des premiers moyens de changement de trajet optique (13) agencés sur le trajet optique entre la première source lumineuse (11) et l'objectif (17), pour modifier le trajet de déplacement du faisceau provenant de la première source lumineuse (11),
   des deuxièmes moyens de changement de trajet optique (23) agencés sur le trajet optique entre la seconde source lumineuse (21) et l'objectif (17), pour modifier le trajet de déplacement du faisceau provenant de la seconde source lumineuse (21),
   des troisièmes moyens de changement de trajet optique (15) agencés sur le trajet optique entre les premiers moyens de changement de trajet optique (13) et l'objectif (17), et entre les deuxièmes moyens de changement de trajet optique (23) et l'objectif (17), pour transmettre l'un des faisceaux provenant des première et seconde sources lumineuses (11 ; 21), et réfléchir les autres faisceaux, pour modifier le trajet de déplacement d'un faisceau incident,
   un premier photodétecteur (19) pour recevoir le faisceau réfléchi par un disque optique correspondant et ayant traversé l'objectif (17), les troisième moyens de changement de trajet optique (15) et ensuite les premiers moyens de changement de trajet optique (13) après être provenu de la première source lumineuse (11) et convertir de manière photoélectrique le faisceau reçu,
   une première unité de traitement de signal (20) pour détecter un signal de lecture du premier disque optique à partir du signal délivré en sortie par le premier photodétecteur (19),
un second photodétecteur (29) pour recevoir le faisceau réfléchi par ledit disque optique correspondant et ayant traversé l'objectif (17), les troisièmes moyens de changement de trajet optique (15) et ensuite les deuxièmes moyens de changement de trajet optique (23) après être provenu de la seconde source lumineuse (21), et convertir de manière photoélectrique le faisceau reçu, et
une seconde unité de traitement de signal (30) pour traiter les signaux délivrés en sortie par le second photodétecteur (19),

**caractérisé en ce que** :

des premiers moyens de fractionnement de lumière (25) sont agencés sur le trajet optique entre la seconde source lumineuse (21) et les deuxièmes moyens de changement de trajet optique (23), pour fractionner le faisceau incident en au moins deux faisceaux incluant les premier et deuxième faisceaux à focaliser en tant que point lumineux principal et point lumineux secondaire, respectivement, sur un disque optique correspondant et pour amener une quantité prédéterminée d'aberration sphérique uniquement au deuxième faisceau, de sorte que le deuxième faisceau inclut une aberration sphérique relativement au premier faisceau,
le second photodétecteur (29) comporte des première et deuxième parties de réception de lumière (29a, 29b), pour recevoir les premier et deuxième faisceaux réfléchis par le disque optique correspondant, et
la seconde unité de traitement de signal (30) traite les signaux délivrés en sortie par les première et deuxième parties de réception de lumière du second photodétecteur (29) dans lequel en supposant qu'un signal de lecture principal provenant du point lumineux principal, qui a été reçu et converti de manière photoélectrique par la première partie de réception de lumière, est $S_m$, et qu'un signal de lecture secondaire provenant du point lumineux secondaire, qui a été reçu et converti de manière photoélectrique par la deuxième partie de réception de lumière, est $S_{sub}$, et que k est un facteur de gain, la seconde unité de traitement de signal (30 ; 60) traite les signaux délivrés en sortie par les première et deuxième parties de réception de lumière (29a, 29b ; 59a, 59b) en utilisant la formule suivante, de manière à délivrer en sortie un signal de lecture final S à partir duquel une aberration chromatique provoquée par différentes longueurs d'onde des faisceaux provenant des première et seconde sources lumineuses (11, 21), et/ou une aberration sphérique provoquée par une différence d'épaisseur entre les premier et second disques optiques, sont corrigées :

$$S = S_m + k (S_m - S_{sub})$$

2. Capteur optique selon la revendication 1, dans lequel la première source lumineuse (11) émet une lumière bleue et la seconde source lumineuse (21) émet une lumière rouge.

3. Capteur optique selon la revendication 1 ou 2, dans lequel les premiers moyens de fractionnement de lumière sont un élément optique holographique (HOE) (25).

4. Capteur optique selon l'une quelconque des revendications précédentes, dans lequel la seconde unité de traitement de signal (30) comporte en outre un retard (31) entre la fin de sortie de la première et/ou de la deuxième parties de réception de lumière (29a, 29b) et au moins une fin d'entrée de la seconde unité de traitement (20), pour retarder l'un des signaux délivrés en sortie par les première et deuxième parties de réception de lumière (29a, 29b) pour correspondre aux phases des signaux électriques.

5. Capteur optique selon l'une quelconque des revendications précédentes, dans lequel les premiers moyens de fractionnement de lumière sont un élément optique holographique de polarisation (HOE) (55) pour générer un premier faisceau ayant une composante polarisée et un deuxième faisceau ayant l'autre composante polarisée, et amener une quantité prédéterminée d'aberration sphérique uniquement au deuxième faisceau ayant l'autre composante polarisée, de sorte que le deuxième faisceau inclut en outre une aberration sphérique relative au premier faisceau, et le capteur optique comporte en outre un diviseur de faisceau de polarisation (58) disposé sur le trajet optique entre les deuxièmes moyens de changement de trajet optique (53) et le second photodétecteur (59), pour transmettre ou refléter les premier et deuxième faisceaux réfléchis par un disque optique correspondant et ayant traversé l'objectif (17), les troisièmes moyens de changement de trajet optique (15) et ensuite les deuxièmes moyens de changement de trajet optique (23), conformément à leur polarisation, dans lequel les première et deuxième parties de réception de lumière (59a, 59b) du second photodétecteur (59) sont agencées de sorte qu'elles sont capables de recevoir séparément les premier et deuxième faisceaux ayant différentes composantes polarisées divisées par le diviseur de faisceau de polarisation (58).

6. Capteur optique selon l'une quelconque des revendications 1 à 5, comportant en outre :

des seconds moyens de fractionnement de lumière sur le premier trajet optique entre la première source lumineuse (11) et les moyens de changement de trajet optique (13), pour fractionner le faisceau émis par la première source lumineuse (11) en troisième et quatrième faisceaux à focaliser en tant que point lumineux principal et point lumineux secondaire sur un disque optique correspondant, respectivement,

dans lequel le premier photodétecteur (19) inclut des troisième et quatrième parties de réception de lumière pour recevoir les troisième et quatrième faisceaux réfléchis par un disque optique correspondant et ayant traversé l'objectif (17), les troisièmes moyens de changement de trajet optique (15) et ensuite les premiers moyens de changement de trajet optique (13), respectivement, et la première partie de traitement de signal délivre en sortie un signal de lecture à partir duquel une aberration sphérique provoquée par un écart d'épaisseur du premier disque optique est corrigée, à partir de signaux électriques convertis de manière photoélectrique par les troisième et quatrième parties de réception de lumière après avoir été reçus par celles-ci.

# FIG. 1 (PRIOR ART)

# FIG. 2 (PRIOR ART)

# FIG. 3 (PRIOR ART)

# FIG. 4

# FIG. 5

# FIG. 6

EP 1 130 581 B1

# FIG. 7

# FIG. 8

# FIG. 9

# FIG. 10

EP 1 130 581 B1

# FIG. 11

# FIG. 12